# EUROPEAN PATENT APPLICATION

(11) **EP 2 990 256 A1**
(43) Date of publication of application: **02.03.2016**
(21) Application number: 15177605.1
(22) Date of filing: 21.07.2015
(51) Int. Cl.: B60L 11/18, B60L 3/04

(54) **VEHICLE CHARGING DEVICE AND METHOD**

(30) Priority: 01.09.2014 KR 20140115268
(71) Applicant: LSIS Co., Ltd., Anyang-si, Gyeonggi-do 431-848 (KR)
(72) Inventor: CHOI, Seung Woo, 431-848 Anyang-si, Gyeonggi-do (KR)
(74) Representative: Lang, Johannes

(57) **Abstract**

A vehicle charging device is provided. The vehicle charging device includes a power input unit receiving power supplied from an external power supply source, a relay unit delivering the power received through the power input unit to a vehicle, a pilot circuit controlling an operation of the relay unit and generating a pilot signal for controlling vehicle charging, wherein the pilot circuit sequentially performs a first operation for leading a stop of the vehicle charging by changing a duty ratio of a pulse width modulation (PWM) signal corresponding to the pilot signal and a second operation for allowing the power not to be delivered to the vehicle by opening the relay unit when the stop of the vehicle charging is not performed by the first operation.

## Description

### CROSS-REFERENCE TO RELATED APPLICATIONS

The present application claims priority under 35 U.S.C. 119 and 35 U.S.C. 365 to Korean Patent Application No. 10-2014-0115268 (filed on 01 September, 2014), which is hereby incorporated by reference in its entirety.

### BACKGROUND

The present disclosure relates to a vehicle charging device and method capable of protecting an electric vehicle and an internal circuit of a charging device through leading a power converting unit inside the electric vehicle to stop charging when vehicle charging is required to be stopped.

In order to prepare for a continuous oil price increase and fossil fuel exhaustion, researches and commercialization are actively performed about an electric movement means such as an electric vehicle or two-wheeled vehicle driven by using an electric battery and electric motor, instead of a typical internal combustion engine vehicle or auto-bike depending on oil fuel.

When using an electric vehicle, it is very advantageous in a relative low maintenance cost compared to oil fuel and improvement in an environmental issue according to an effect of decrease in carbon dioxide. Accordingly, it is a trend that an electric vehicle market is gradually activated in each country, and it is expected that such a trend will be gradually extended.

Charging an electric vehicle requires a separate charging device. Since such a charging device is installed in a charging station like a gas station or in a home, an electric device needing charging is connected to the charging device through a connector and then receives necessary power.

At this point, the charging device uses a pilot control signal (pilot signal) for controlling a current amount provided to the electric vehicle. The charging device generates a pilot signal to perform pilot communication with an electric vehicle, and at this point, a charging state is defined through a maximum magnitude of the pilot signal. Such a pilot signal enables the charging state of the vehicle to be monitored.

When overvoltage, low voltage, overcurrent, or various accidental situations occur during charging the vehicle, AC power delivered to the vehicle is cut off by opening a relay circuit inside the charging device connected to the vehicle through a connector.

However, when supplying AC power to the vehicle is instantaneously stopped by forcibly opening the relay circuit, a circuit inside the vehicle as well as a circuit inside the charging device causes malfunction or failure. In other words, an issue such as fusing of the relay circuit may occur by a load of the relay circuit through a forcible turn-off of the relay circuit or an overload on the circuit inside the vehicle.

### SUMMARY

Embodiments provide a device and method capable of protecting a relay circuit by leading a vehicle to stop charging and of preparing the circuit inside the vehicle for an abrupt stop of supplying power when vehicle charging is required to be stopped due to occurrence of an abrupt situation during charging.

In one embodiment, A vehicle charging device includes: a power input unit receiving power supplied from an external power supply source; a relay unit delivering the power received through the power input unit to a vehicle; a pilot circuit controlling an operation of the relay unit and generating a pilot signal for controlling vehicle charging, wherein the pilot circuit sequentially performs a first operation for leading a stop of the vehicle charging by varying a duty ratio of a pulse width modulation (PWM) signal corresponding to the pilot signal and a second operation for allowing the power not to be delivered to the vehicle by opening the relay unit when the stop of the vehicle charging is not performed by the first operation.

In another embodiment, a vehicle charging method by using a charging control device connected to a vehicle including a battery and controlling vehicle charging, the vehicle charging method includes: checking a charging current value of the vehicle, wherein the vehicle includes a power converting unit converting power received from the charging control device, a charging control unit controlling an operation of the power converting unit, and a second pilot circuit performing pilot communication with the charging control device, and the charging control device includes a first pilot circuit communicating with the second pilot circuit and a relay unit delivering the power to the power converting unit; determining whether the checked charging current value corresponds to a preset charging current value; decreasing, by the charging control unit, the charging current value by controlling the power converting unit when the measured charging current value does not correspond to the preset charging current value; checking whether the vehicle charging is decreased in correspondence to the decreased charging current value; and changing, by the first pilot circuit, a duty ratio of a PWM signal delivered to the second pilot signal when the vehicle charging is not decreased.

The details of one or more embodiments are set forth in the accompanying drawings and the description below. Other features will be apparent from the description and drawings, and from the claims.

### BRIEF DESCRIPTION OF THE DRAWINGS

Figs. 1 and 2 are views illustrating exemplary systems for charging a vehicle according to an embodiment.
Fig. 3 is a block diagram for explaining detailed configurations of a vehicle charging device and a vehicle according to an embodiment.
Fig. 4 is a flowchart for explaining a vehicle charging method according to an embodiment.
Fig. 5 illustrates an exemplary pilot signal for requesting a vehicle charging stop according to a first embodiment.
Fig. 6 illustrates an exemplary pilot signal for requesting a vehicle charging stop according to a second embodiment.

### DETAILED DESCRIPTION OF THE EMBODIMENTS

Reference will now be made in detail to the embodiments of the present disclosure, examples of which are illustrated in the accompanying drawings.

A vehicle charging device and method according to an embodiment will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, altering, and changing, and will fully convey the concept of the invention to those skilled in the art.

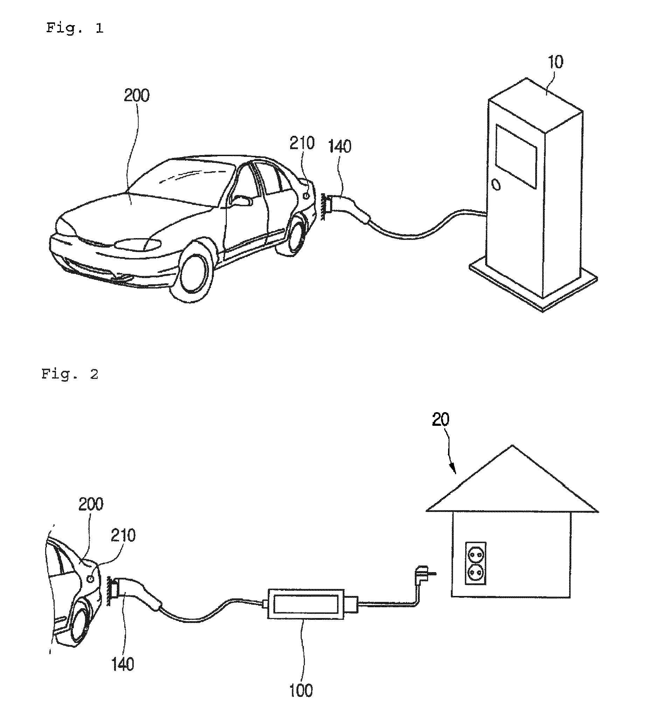

Figs. 1 and 2 are views illustrating exemplary systems for charging a vehicle according to an embodiment.

First, referring to Fig. 1, a charging system of a first embodiment includes an AC charging device 10 and an electric vehicle 30 electrically charged through the AC charging device 10.

The AC charging device 10 allows a vehicle battery to be charged with AC power supplied from an external AC power supply source through a connector 140 connected to an inlet 210 of the vehicle 200. The AC charging device 10 may be installed in a charging station or home, and a current amount transferred for charging may be controlled through pilot communication between the AC charging device 10 and the vehicle 200.

Furthermore, the vehicle charging device may be a portable cord-set device as well as a charging station type as illustrated in Fig. 1.

In other words, as illustrated in Fig. 2, the vehicle charging device connects a charging cable between the vehicle 200 and a power outlet in home 20 to enable a battery mounted in the vehicle 200 to be charged by a use power supply (e.g., a system power supply) outside the vehicle.

Hereinafter, a power supply outside the vehicle may be referred to 'power supply source' or 'external power supply', and vehicle charging by the power supply source or external power supply may be referred to 'external charging'.

The vehicle charging device 100 of an embodiment may be a charging circuit interrupt device (CCID) including a relay circuit and pilot circuit, and the vehicle charging device 100 may include a plug connected to the external power supply, a cable connecting the plug and the vehicle charging device 100, and a connector 140 connected to the vehicle 200.

In addition, a communication device for communicating with the vehicle charging device 100 (e.g., CCID) may be provided in the vehicle 200 and the communication device may deliver a state of the vehicle 200 to the vehicle charging device 100, or conform a control command related to charging by the vehicle charging device 100.

In addition, the vehicle charging device 100 may perform a control on the vehicle charging by using the external power supply, and include a CCID relay capable of cutting off or allowing a supply of the external power and a pilot circuit for checking a state of the vehicle or external power supply.

Here, the CCID relay may be turned on/off by the pilot circuit and the pilot circuit may output a pilot signal to a charging electronic control unit (ECU) of the vehicle 200. In addition, the pilot signal is a signal for detecting a state of the vehicle 200 on the basis of a potential of the pilot signal manipulated by the charging ECU together with notifying an allowable current value (regulated current) of a charging cable (grid cable, connector cable) to the charging ECU of the vehicle 200.

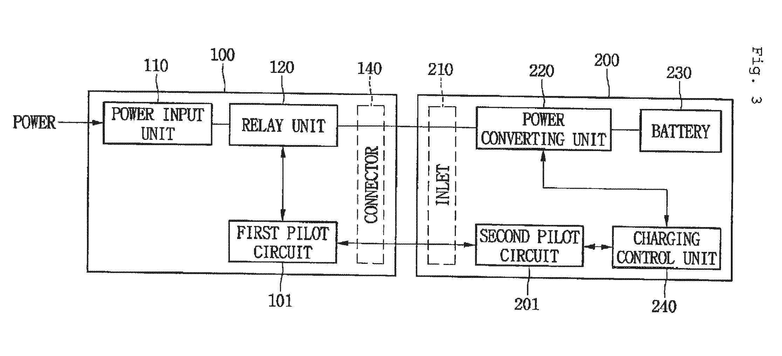

Fig. 3 is a block diagram for explaining detailed configurations of a vehicle charging device and a vehicle.

Referring to Fig. 3, the vehicle charging device 100 includes a power input unit 110 receiving AC power from the external power supply source, a relay unit 120 relaying the received power to the connected vehicle 200, a first pilot circuit 101 for controlling a current amount supplied to the vehicle 200, and a connector 140 connected to the vehicle 200.

Furthermore, the vehicle 200 includes an inlet 210 connected to the connector 140 of the vehicle charging device, a power converting unit 220 converting the received AC power into DC power to charge the battery 230 stored in the vehicle, and a charging control unit 240 controlling an operation of the power converting unit 220.

In detail, the power input unit 110 of the vehicle charging device 100 is connected to an external AC power supply source and receives AC power. At this point, the AC power input unit 110 may further include a power indicating unit indicating whether the power is input from the outside.

The relay unit 120 is disposed between the power input unit 110 and the connector 140 to operate according to the control command of the first pilot circuit 101. In addition, according to the control of the first pilot circuit 101, the relay unit 120 may deliver the power received by the power input unit 110 to a connector side and stop the delivery.

The first pilot circuit 101 is electrically connected to the second pilot circuit 201 of the vehicle and pilot communication therebetween is performed. In addition, the first and second pilot circuits 101 and 201 may be collectively referred to a pilot circuit unit. When the connector 140 and the inlet 210 are coupled to be electrically connected therebetween, a complete control pilot circuit is formed with the first and second pilot circuits 101 and 201 connected.

The pilot circuit unit formed with the first and second pilot circuits 101 and 201 performs pilot communication by using a pilot signal and controls vehicle charging. The first pilot circuit 101 generates a pilot signal, and the generated pilot signal is delivered to the second pilot circuit 201 of the vehicle, and the charging control unit 240 connected to the second pilot circuit 201 confirms this. In addition, whether power is converted through AC-DC conversion of the power converting unit 220, or a current amount converted for charging may be controlled by the charging control unit 240.

At this point, when the pilot signal is a pulse width modulated (PWM) signal and conforms an IEC 6185101 standard, the current amount receivable by the power converting unit 220 of the vehicle 200 may be notified to the charging control unit 240 of the vehicle 200 by adjusting a pulse width of the pilot signal within an AC charging current range from about 6A to about 51A. For example, the chargeable current may become (%duty ratio)*0.6, where the %duty ratio denotes a duty ratio of the pulse width of the pilot signal, and the current amount to be received by the power converting unit 220 may be controlled by adjusting the %duty ratio.

Furthermore, the connector 140 may be coupled to the inlet 210 to form a proximity detecting circuit. The pilot circuit units 101 and 201 may stop in advance current supply before the connector 140 is stripped from the inlet 210 by detecting in advance stripping of the connector 140 through a voltage drop in the proximity detection circuit formed of the coupled connector 140 and inlet 210 and by opening (e.g., off) the relay unit 120.

In particular, together with items for a vehicle charging control between the first and second pilot circuits, a control signal is delivered from the first pilot circuit 101, which allows information on the vehicle charging state to be checked and power conversion of the power converting unit 220 to be reduced to finally allow the power conversion to be stopped when a vehicle charging is required to be stopped according to an embodiment. In addition, an agreed charging stop process may be performed by setting a PWM duty ratio of the pilot signal to 100% through a signal for requesting the charging stop.

A description about this will be provided with reference to a flowchart.

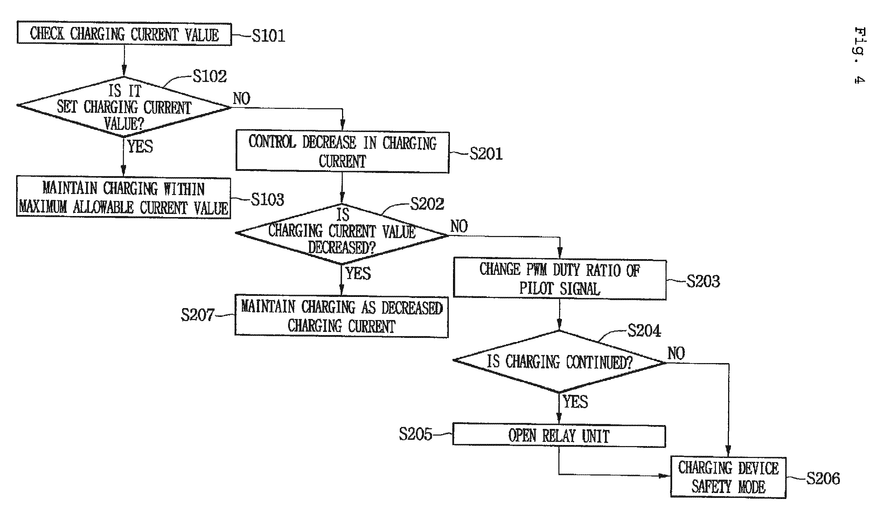

Fig. 4 is a flowchart for explaining a vehicle charging method according to an embodiment.

First, when vehicle charging is started, a charging current value is checked and delivered by the pilot circuit unit. In other words, the connector 140 of the vehicle charging device is connected to the vehicle inlet 210 and the relay unit of the vehicle charging device delivers external power to the vehicle. In addition, the power converting unit 220 of the vehicle converts AC power to DC power and the battery 230 is charged with the DC power.

A present charging current value in the charging process may be detected by the power converting unit 220 and the charging control unit 240 controlling an operation of the power converting unit 220. In addition, the measured charging current value may be delivered to the first pilot circuit 101 through the second pilot circuit.

In addition, the first pilot circuit 101 determines whether the measured charging current value corresponding to a preset charging current value (operation S102), and determines the charging state as normal and maintains the charging in a maximum allowable current range when the measured charging current value is identical to the preset charging current value (operation S103).

On the contrary, when the measured charging current value is different from the preset charging current value, the first pilot circuit 101 delivers a control signal for decreasing the charging current to the second pilot signal (operation S201). In other words, the first pilot circuit 101 delivers, as the charging control signal, the decreased PWM duty ratio to the second pilot circuit 201, and the charging control unit 240 decreases a DC conversion ratio (or DC conversion amount) by the power converting unit 220 on the basis of the received PWM control signal. For example, the PWM duty ratio decreased by 10% from the current PWM duty ratio is delivered to the second pilot circuit 201.

Then the first pilot circuit 101 checks whether the vehicle charging is actually performed with the decreased charging current (operation S202). In other words, the first pilot circuit 101 requests from the second pilot circuit 201 to measure a present charging current value and deliver the measured charging current value, and the second pilot circuit 201 delivers the measured charging current value to the first pilot circuit 101 through the charging control unit 240 and the power converting unit 220. In addition, the first pilot circuit 101 checks whether the additionally received and measured charging current value is decreased by a PWM duty ratio decreased at a previous operation.

According to the checked result, when the charging current value is decreased by the decreased PWM duty ratio, the pilot circuit 101 delivers to the second pilot circuit 201 a control signal for continuing the vehicle charging with the decreased charging current value.

However, as the checked result, when the charging current value is not actually deceased or not decreased by the requested value even after the control signal (i.e., PWM signal) for requesting the first pilot circuit 101 to decrease the charging current value is delivered, the first pilot circuit 101 determines the vehicle charging as an abnormal state.

In other words, the first pilot circuit 101 determines it as a state where the vehicle charging is to be stopped and generates a control signal, namely, a duty ratio of 100% of the PWM signal and to deliver the control signal to the second pilot circuit 201 (operation S203). At this point, when the duty ratio of the PWM signal delivered to the second pilot circuit 201 is 100%, the charging control unit 240 gradually decreases the power conversion by the power converting unit 220 to finally allow the power conversion to be 0.

Even though the charging current value is made to be decreased by decreasing the duty ratio of the PWM signal, since the charging current is not normally decreased by the power converting unit 220, it is determined that abnormality or malfunction occurs in a circuit inside the vehicle. In this case, the first pilot circuit 101 determines that a command for stopping the vehicle charging by further decreasing the duty ratio of the PWM signal is not to be normally delivered, sets the duty ratio of the PWM signal to 100% and delivers the control signal to the vehicle.

Like this, when the control signal having the duty ratio of 100% is delivered from the first pilot circuit 101, the charging control unit 240 of the vehicle issues a command for gradually lowering the power conversion by the power converting unit 220 for a preset time, and accordingly the charging current value may be gradually decreased by the power converting unit 220. Through the method, at the time of abnormality occurrence of vehicle charging, stopping of the vehicle charging may be stably led in comparison to a case when power is not allowed to be delivered by immediately opening the relay unit 120 of the charging device.

Furthermore, when the PWM signal having the duty ratio of 100% is delivered and then a preset time (e.g., three seconds) passes, the first pilot circuit 101 checks whether the charging of the battery 230 is performed (operation S204). This is because such a control command may not be normally executed due to internal malfunction of the vehicle circuit, when the vehicle charging is continued even though the PWM signal having the duty ratio of 100% is used as a command for stopping the vehicle charging.

The charging control unit 240 checks whether DC conversion is performed by the power converting unit 220 for a check request about charging continuation, which is delivered from the first pilot circuit 101. In addition, the checked items may be delivered to the first pilot circuit 101 through the second pilot circuit 201. In addition, when determining the vehicle charging to be continued, the first pilot circuit 101 stops the vehicle charging by opening the relay unit 120 and allowing the AC power not to be supplied to the vehicle (operation S205).

However, as the check result by the first pilot circuit 101, in case of stopping the vehicle charging, the vehicle charging device 100 enters a safety mode (operation S206), because a control signal having a PWM duty ratio of 100% is normally delivered and charging is stopped by the charging control unit 240 and power converting unit 220. Here, in the safety mode of the vehicle charging device, an LED lamp may be used to notify the user of a current stop of vehicle charging.

Furthermore, after the first pilot circuit 101 changes the duty ratio of the PWM signal to 100% as the command for stopping the vehicle charging, the charging control unit 240 monitors whether the vehicle charging is continued. In other words, a configuration for checking whether the charging is continued in operation S204 may continuously monitor whether the vehicle charging is actually stopped while stopping the battery charging is led by the power converting unit 220, in a case where the charging control unit 240 receives a signal of PWM duty ratio of 100% through the second pilot circuit 201 even when there is not a check request for whether the charging is continued from the first pilot circuit 101.

In addition, the charging control unit 240 may allow an open or not of the relay unit 120 by the first pilot circuit 101 to be determined by delivering a monitoring result of whether the vehicle charging is stopped to the first pilot circuit 101 through the second pilot circuit 210.

Furthermore, in an embodiment, when the stopping the vehicle charging is necessary, the vehicle is led to autonomously decrease power conversion before stopping an operation of the relay unit of the vehicle charging device, namely, before the relay circuit is opened. In addition, the PWM duty ratio of the pilot signal requesting the vehicle charging stop may be set to 100%. However, such a duty ratio setting may be set differently according to modification of an embodiment,

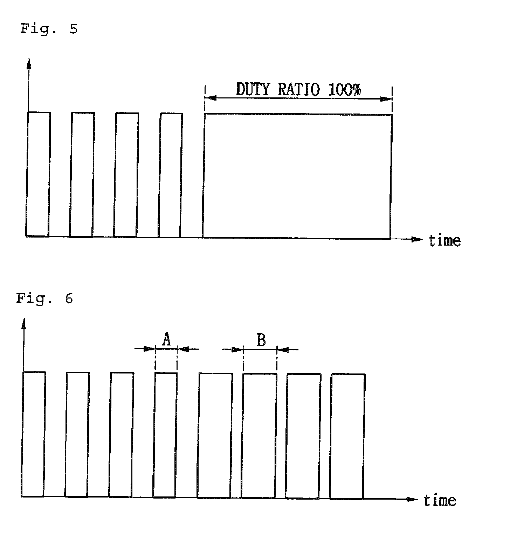

Fig. 5 is a view illustrating an exemplary pilot signal for requesting a vehicle charging stop according to a first embodiment, and Fig. 6 is a view illustrating an exemplary pilot signal requesting a vehicle charging stop according to a second embodiment.

First, in Fig, 5, when the vehicle charging stop is necessary, the first pilot circuit 101 generates a PWM signal having a duty ratio of 100%, while generating the PWM signal having a predetermined duty ratio. Description about this is the same as the above description.

However, according to an embodiment, the charging control unit 240 of the vehicle may issue a command for stopping DC conversion by the power converting unit even when the duty ratio of the PWM signal delivered through the second pilot circuit 201 is abruptly increased to a preset ratio or greater. For example, as illustrated in Fig. 6, when the PWM signal having a duty ratio of B% deviated from a preset ratio from the PWM signal having the duty ratio of A% is delivered through the second pilot circuit, the charging control unit 240 may perform a control so that the power conversion is gradually decreased by the power converting unit and accordingly battery charging is gradually decreased.

According to embodiments, when vehicle charging is required to be stopped, it is possible to reduce a load to be burdened on a circuit such as a power converting unit of the vehicle by physically opening a relay circuit, and through this, a stable stop of the vehicle charging can be led.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A vehicle charging device comprising:
a power input unit receiving power supplied from an external power supply source;
a relay unit delivering the power received through the power input unit to a vehicle;
a pilot circuit controlling an operation of the relay unit and generating a pilot signal for controlling vehicle charging,
wherein the pilot circuit sequentially performs a first operation for leading a stop of the vehicle charging by changing a duty ratio of a pulse width modulation (PWM) signal corresponding to the pilot signal and a second operation for allowing the power not to be delivered to the vehicle by opening the relay unit when the stop of the vehicle charging is not performed by the first operation.

2. The vehicle charging device according to claim 1, wherein the pilot circuit sets the duty ratio of the PWM signal delivered to a vehicle side to 100% when performing the first operation.

3. The vehicle charging device according to claim 1, wherein the pilot circuit generates a signal having a duty ratio increased by a preset ratio or greater in comparison to a duty ratio of the PWM signal pre-delivered to a vehicle side when performing the first operation.

4. The vehicle charging device according to claim 1, wherein, before the first operation is performed, the pilot circuit checks whether a charging current value for the vehicle charging corresponds to a preset charging current value and decreases the charging current value for the vehicle charging to a preset range when the checked charging current value does not correspond to the preset charging current value.

5. The vehicle charging device according to claim 4, wherein the pilot circuit further checks whether the charging current value for the vehicle charging is decreased to the preset range and performs the first operation when as a result of the check, the charging current value is not decreased.

6. The vehicle charging device according to claim 5, wherein, after performing the first operation, the pilot circuit checks whether the vehicle charging is stopped and performs the second operation when as a result of the check, it is determined that the vehicle charging is continued.

7. A vehicle charging method by using a charging control device connected to a vehicle comprising a battery and controlling vehicle charging, the vehicle charging method comprising:
checking a charging current value of the vehicle, wherein the vehicle comprises a power converting unit converting power received from the charging control device, a charging control unit controlling an operation of the power converting unit, and a second pilot circuit performing pilot communication with the charging control device, and the charging control device comprises a first pilot circuit communicating with the second pilot circuit and a relay unit delivering the power to the power converting unit;
determining whether the checked charging current value corresponds to a preset charging current value;
decreasing, by the charging control unit, the charging current value by controlling the power converting unit when the measured charging current value does not correspond to the preset charging current value;
checking whether the vehicle charging is decreased in correspondence to the decreased charging current value; and
changing, by the first pilot circuit, a duty ratio of a PWM signal delivered to the second pilot signal when the vehicle charging is not decreased.

8. The vehicle charging method according to claim 7, wherein the changing of the duty ratio of the PWM signal comprises:
generating, by the first pilot circuit, a PWM signal having a duty ratio of 100%; and
delivering the PWM signal.

9. The vehicle charging method according to claim 7, further comprising:
checking whether the vehicle charging is continued after the duty ratio of the PWM signal is changed,
wherein the whether the vehicle charging is continued is checked by the first pilot circuit or the charging control unit.

10. The vehicle charging method according to claim 9, wherein, when as a result of the check on the whether the vehicle charging is continued, the power delivered to the power converting unit is removed by opening the relay unit under a control of the first pilot circuit.
